# EUROPÄISCHE PATENTSCHRIFT

(11) **EP 3 169 020 B1**
(45) Veröffentlichungstag und Bekanntmachung des Hinweises auf die Patenterteilung: **06.02.2019**
(21) Anmeldenummer: 16197959.6
(22) Anmeldetag: 09.11.2016
(51) Int. Cl.: H04L 12/28

(54) **AUSWERTUNG VON STANDORTBEZOGENEN DATEN VON HEISSGETRÄNKEZUBEREITUNGSGERÄTEN**
EVALUATION OF LOCATION-BASED DATA OF HOT BEVERAGE PREPARATION DEVICES
ÉVALUATION DE DONNÉES SUR SITE D'APPAREILS DE PRÉPARATION DE BOISSONS CHAUDES

(30) Priorität: 16.11.2015 DE 102015222565
(43) Veröffentlichungstag der Anmeldung: 17.05.2017
(73) Patentinhaber: BSH Hausgeräte GmbH, 81739 München (DE)
(72) Erfinder: Brunner, Andreas, 83301 Traunreut (DE); Krautenbacher, Otto, 83349 Palling (DE); Redelstab, Markus, 83125 Eggstätt (DE)

(56) Entgegenhaltungen:
- US-A1- 2004 100 933
- US-A1- 2011 249 593
- US-A1- 2015 106 846
- US-A1- 2015 256 355

## Beschreibung

Die Erfindung betrifft ein Datenübertragungssystem, welches ein Hausgerät und einen zentralen Server aufweist. Weiterhin betrifft die Erfindung ein Verfahren zum Betreiben eines Hausgeräts und ein Hausgerät selbst, insbesondere für Haushaltszwecke.

Für Produzenten von Hausgeräten für den Hausgebrauch ist es zunehmend wichtig, Informationen über die spezielle Nutzung ihrer Produkte sowie deren Einsatzbedingungen zu erhalten. Als Hausgerät sollen alle Arten von elektrischen Geräten verstanden werden, welche bei der privaten Haushaltsführung Anwendung finden. Beispiele für Hausgeräte sind Heißgetränkezubereitungsgeräte, insbesondere Kaffeemaschinen und Kaffeeautomaten, Waschmaschinen, Wäschetrockner, Spülmaschinen, Kochgeräte und Kühlschränke. Zum einen können solche Informationen Präferenzen der Nutzer verraten, so dass sich der Produzent besser auf eine zukünftige Nachfrage und die Bedürfnisse seiner Kunden einstellen kann. Zum anderen kann der Produzent dem Verbraucher zusätzliche, für ihn wichtige Informationen zur Verfügung stellen und maßgeschneiderte Wartungsangebote übermitteln, so dass für den Verbraucher ein reibungsloser Betrieb des erworbenen Produkts gewährleistet werden kann.

In DE 20 2009 003 896 U1 wird ein elektrischer Kaffeeautomat beschrieben, welcher eine Schnittstelle zur Kommunikation mit externen Geräten umfasst. Sie erlaubt die Teilnahme an einem lokalen Netzwerk. Der Kaffeeautomat besitzt einen Gerätespeicher, in dem Diagnosedaten, wie zum Beispiel Statistiken, Fehlermeldungen oder Ein- und Ausgabedaten einzelner Baugruppen abgespeichert sind. Die Daten können über die Kommunikationsschnittstelle an eine autorisierte externe Rechnereinheit übermittelt werden.

Die Druckschrift US 2004/100933 A1 beschreibt ein Netzwerk, das aus einer Vielzahl von Informationsgeräten besteht, und das einem Benutzer ermöglicht, physische Positionen der jeweiligen Informationsvorrichtung leicht zu erkennen, insbesondere zu erkennen, wo das bestimmte Informationsgerät in einem bestimmten Netzwerk physisch vorhanden ist, indem beispielsweise eine Beleuchtungseinrichtung Verwendung findet. So kann der Benutzer das Informationsgerät beispielsweise einem "Wohnzimmer", "Schlafzimmer" oder "Kinderzimmer" zuordnen.
Ein für einen Informationsaustausch mit Hausgeräten nützliches Netzwerk ist durch Home Connect realisiert, welches von den Firmen BSH und Siemens definiert wurde. Home Connect bietet eine offene Plattform für die Vernetzung von Hausgeräten und erlaubt es, dass ein Anwender Daten zwischen seinem mobilen Endgerät, wie zum Beispiel ein Smartphone, und seinen Hausgeräten überträgt. Darüber hinaus ist auch die Kommunikation aus dem Heimnetzwerk nach draußen möglich. Beispielsweise können aus dem Heimnetzwerk Daten, welche die Hausgeräte betreffen oder von den Hausgeräten stammen, über das Internet an einen zentralen Server übermittelt werden, der von einem Hausgeräteproduzenten betrieben wird.

Ein Ziel von Herstellern von Hausgeräten besteht darin, besser auf die Kundenbedürfnisse in bestimmten Regionen eingehen zu können und einen größeren Erfolg am Markt zu erreichen.

In diesem Zusammenhang sind Hersteller von Hausgeräten vor die Aufgabe gestellt, den Service für Benutzer und Betreiber von Hausgeräten zu verbessern und an spezifische regionale Anforderungen anzupassen sowie die Hausgeräte selbst zu verbessern. Eine weitere Aufgabe besteht darin, Produkte, auch auf regionale Präferenzen angepasst, gezielter zu bewerben.

Diese Aufgaben werden mit Hilfe eines Datenübertragungssystems gemäß Patentanspruch 1, durch ein Verfahren zum Betreiben eines Hausgeräts gemäß Patentanspruch 9 und durch ein Hausgerät gemäß Patentanspruch 10 gelöst.

Das erfindungsgemäße Datenübertragungssystem zeichnet sich dadurch aus, dass es dazu eingerichtet ist, Informationen zu ermitteln, die es ermöglichen, die Position des Hausgeräts zu ermitteln, und zusätzliche Informationen, welche den Gerätetyps des Hausgeräts umfassen, an den zentralen Server zu übermitteln. Dabei kann - muss aber nicht zwangsläufig - das Hausgerät seine Position kennen. Es reicht, wenn das Hausgerät Daten, wie zum Beispiel seine IP-Adresse, übermittelt, die es dem zentralen Server ermöglichen, Rückschlüsse auf die Position des Hausgeräts zu ziehen. Eine der Erfindung zugrunde liegende Idee liegt darin, Gerätedaten bzw. Daten über die spezifische Nutzung der Geräte ortsaufgelöst zu akquirieren, um im Kontakt mit den Kunden sowie bei der Herstellung und Konfiguration der Hausgeräte regionale Besonderheiten besser berücksichtigen zu können. Als Position des Hausgeräts ist insbesondere dessen geographische Position zu verstehen. Die Information bezüglich des Gerätetyps kann zum Beispiel eine Klassifikation bezüglich der Funktion des einzelnen Hausgeräts umfassen, sie kann insbesondere auch einen Namen, Markennamen, eine Typennummer oder Ähnliches umfassen. Bei dem zentralen Server kann es sich um ein von einem Hersteller oder Dienstleister betriebenes Rechnersystem, insbesondere ein Host-Computer, handeln, das mit einer Vielzahl von Heimnetzwerken oder auch direkt mit den Hausgeräten als Clients vernetzt ist. Der Server kann auch eine Mehrzahl von Rechnersystemen umfassen, die miteinander vernetzt sind und ein verteiltes System bilden. Der Server kann außerdem auch als virtueller Server bzw. Softwareserver auf einem Rechnersystem installiert sein, welches noch weitere Softwareserver umfassen kann.

Erfindungsgemäß umfasst das Datenübertragungssystem eine zusätzliche Datenbank, welche auf geographische Positionen bezogene Informationen speichert, wobei der zentrale Server dazu eingerichtet ist, auf Basis der von dem Hausgerät empfangenen Positionsinformationen Informationen von der Datenbank abzurufen, welche sich auf die geographische Position des Hausgeräts beziehen. Der zentrale Server ist weiter dazu eingerichtet, auf Basis der von dem Hausgerät und der Datenbank erfassten Informationen eine Ansteuerung des Hausgeräts vorzunehmen, um mit der Übermittlung der Informationen und der zusätzlichen Informationen eine an regionale Bedürfnisse angepasste Interaktion zwischen Kunden, Produzenten und Servicedienstleistern zu erlauben.

Bei dem erfindungsgemäßen Verfahren zum Betreiben eines Hausgeräts werden Informationen, welche die Ermittlung der Position eines Hausgeräts ermöglichen, und zusätzliche Informationen, umfassend den Gerätetyp des Hausgeräts, ermittelt und an einen zentralen Server übermittelt. Die Positions- und Typinformationen können zum Beispiel von dem Hausgerät selbst ermittelt worden sein und an den zentralen Server übertragen werden. Der Gerätestandort kann auch direkt am zentralen Server durch den Empfang von Geräteinformationen, wie zum Beispiel der IP-Adresse des betreffenden Geräts, ermittelt werden. Sie können aber auch von anderen, mit dem Hausgerät kommunizierenden Geräten ermittelt werden und an den zentralen Server gesendet werden. Wie bereits erwähnt, erlaubt die Übermittlung von Orts- und Typinformationen eine an regionale Bedürfnisse besser angepasste Interaktion zwischen Kunden, Produzenten und Servicedienstleistern

Das erfindungsgemäße Hausgerät, vorzugsweise ein Heißgetränkezubereitungsgerät, umfasst eine Typermittlungseinheit, welche dazu eingerichtet ist, den Gerätetyp des Hausgeräts zu ermitteln. Es umfasst zudem eine Positionsermittlungseinheit, welche dazu eingerichtet ist, die geographische Position des Hausgeräts zu ermitteln. Darüber hinaus weist das erfindungsgemäße Hausgerät eine Schnittstelle zur Kommunikation mit einem zentralen Server auf, der zum Beispiel von einem Produzenten des Hausgeräts betrieben wird und über die Schnittstelle die von dem Hausgerät ermittelten Informationen empfängt. In einem einfachen Fall ist die Typermittlungseinheit ein Speicher, in dem die Typdaten hinterlegt und abrufbar sind.

Nach einer vorteilhaften Ausgestaltung der Erfindung umfasst das Datenübertragungssystem zusätzlich ein mobiles Endgerät, welches dazu eingerichtet ist, mit dem Hausgerät zu kommunizieren und seinen eigenen Standort zu ermitteln und diese Standortinformation als Standort des Hausgeräts an den zentralen Server und/oder das Hausgerät zu übermitteln. Dabei werden die Positionsinformationen also nicht direkt von dem Hausgerät selbst, sondern von einem anderen mit dem Hausgerät kommunizierenden und vorzugsweise in räumlicher Nähe des Hausgeräts befindlichen Endgerät ermittelt. Für die Ermittlung der Position des Hausgeräts kann somit auch eine Positionsermittlungseinheit, wie zum Beispiel ein GPS-Empfänger, des mobilen Endgeräts genutzt werden. Dafür benötigt das Hausgerät selbst vorteilhaft keine eigene Positionsermittlungseinheit. Für den Fall, dass das Hausgerät in ein lokales Netzwerk integriert ist, kann die Positionsbestimmung auch durch Abfrage der Adresse des lokalen Netzwerks geschehen. Beispielsweise sind Adressdaten eines lokalen Netzwerks in einem Zugangspunkt eines solchen Netzwerks gespeichert und können von dem zentralen Server des Datenübertragungssystems abgefragt werden.

In einer besonders nützlichen Variante des erfindungsgemäßen Datenübertragungssystems umfassen die zusätzlichen Informationen eine Angabe mindestens einer der folgenden Arten von Daten: Daten, welche die Eigenschaften oder den Status des Hausgeräts charakterisieren, seine Geräte-Identifikationsnummer, die Häufigkeit einer Betriebsart des Hausgeräts, seine Umgebungsbedingungen, insbesondere Sensordaten, die vorzugsweise Werte für die Umgebungstemperatur und/oder die Qualität der Netzspannung umfassen, Gerätefehler des Hausgeräts, insbesondere die Fehlerart und die Fehlanzahl in einem vorbestimmten Zeitraum. Auf Basis der genannten Daten in Verbindung mit der Positionsinformation der Hausgeräte kann zum Beispiel ermittelt werden, welche Geräteklassen oder Marken in welcher Region bevorzugt werden. Außerdem kann die Frage beantwortet werden, welche Betriebsarten in welcher Region besonders beliebt sind. Auch erlauben die Daten Rückschlüsse auf spezifische Umgebungsbedingungen der Geräte in unterschiedlichen Regionen. Zudem kann analysiert werden, ob bei den Hausgeräten regionalspezifisch bestimmte Defekte auftreten. Die Fehlersuche kann auf diese Weise effizienter gestaltet werden.

Nach der Erfassung und Auswertung der empfangenen Daten können Produzenten, Lieferanten und Serviceanbieter diese Informationen nutzen, um auf Kundenbedürfnisse in den jeweiligen Regionen besser einzugehen und einen größeren Erfolg am Markt zu erreichen.

Erfindungsgemäß umfasst das Datenübertragungssystem eine zusätzliche Datenbank, welche auf geographische Positionen bezogene Informationen speichert. Der zentrale Server kommuniziert mit der zusätzlichen Datenbank und ruft auf Basis der von dem Hausgerät empfangenen Positionsinformationen zusätzliche Informationen von der Datenbank ab, welche sich auf die geographische Position des Hausgeräts beziehen. Die zusätzliche Datenbank kann als eine Art geographisches Lexikon betrachtet werden, welches Informationen über verschiedene Orte und Regionen bereitstellt. Aufgrund der Kenntnis der Positionen der Hausgeräte des Datenübertragungssystems kann nun der zentrale Server von der zusätzlichen Datenbank gezielt Informationen zu den Orten beziehen, an denen sich die Hausgeräte befinden.

Auf Basis der von dem Hausgerät und der Datenbank erfassten Informationen wird erfindungsgemäß des Weiteren eine Ansteuerung des Hausgeräts durch den zentralen Server vorgenommen. Vorzugsweise umfasst die Ansteuerung das Übertragen eines Einstellsignals an das Hausgerät. Das Einstellsignal, welches an das Hausgerät gesendet wird, kann zum Beispiel eine Änderung seiner Displayhelligkeit in Abhängigkeit von der Sonnenaufgangs- und Untergangszeit am geographischen Ort des Hausgeräts umfassen. Es kann die Einstellung der Sprache des Hausgeräts auf eine Sprache in der Region, in der es sich befindet, umfassen. Das Einstellsignal kann auch eine Anweisung zur Einstellung der Uhrzeit der Zeitzone, in der sich das Hausgerät befindet, und/ oder eine Anweisung zur Einstellung der Wasserhärte aufweisen. Weiterhin kann das Einstellsignal eine Anweisung zur Einstellung von Prozessparametern in Abhängigkeit von regionalen Vorlieben und/ oder das Bereitstellen von speziellen Programmen in Abhängigkeit von regionalen Vorlieben umfassen. Die Ansteuerung kann überdies die Übertragung von auf dem Display des Hausgeräts anzuzeigenden Informationen umfassen. Auf diese Weise ist eine direkte, regionalspezifische Einstellung und Betreuung von Kundengeräten, beispielsweise durch den Hersteller, möglich, ohne dass sich die Kunden aktiv darum kümmern müssen.

Die anzuzeigenden Informationen können auch die Angabe von Kontaktdaten des nächstgelegenen Kundendienstes und/oder die Angabe der nächsten Verkaufsstelle, an der Zubehör für das Hausgerät verkauft wird, und/oder standortabhängige Werbung umfassen, um so dem Benutzer Hilfestellungen bei auftretenden Problemen und Informationen bezüglich regionalspezifischer Angebote zu geben.

In einer bevorzugten Ausgestaltung des erfindungsgemäßen Datenübertragungssystems ist der zentrale Server dazu eingerichtet, von benachbarten Hausgeräten erfasste Informationen bei der Ansteuerung des Hausgeräts zu berücksichtigen. Sind beispielsweise bestimmte Informationen über das anzusteuernde Gerät erhältlich, können die fehlenden Informationen durch regionalspezifische Informationen über in der Nähe befindliche Geräte ersetzt werden, so dass zumindest regionale Besonderheiten bei der Ansteuerung des Geräts berücksichtigt werden.

Vorzugsweise basiert die Datenübertragung zwischen dem Hausgerät und dem zentralen Server des erfindungsgemäßen Datenübertragungssystems auf dem Internet-Protokoll. Da ein Zugang zum Internet fast flächendeckend gewährleistet ist, lässt sich eine Datenübertragung auf Basis des Internet-Protokolls fast überall realisieren.

In einer besonders kundenfreundlichen Variante des erfindungsgemäßen Datenübertragungssystems hat der Benutzer des Hausgeräts die Möglichkeit, die Datenübertragung von dem Hausgerät an den zentralen Server abzuschalten. Alternativ kann auch eine Datenübertragung nur von dem zentralen Server zu dem Hausgerät erlaubt werden, aber nicht umgekehrt, d. h., nicht von dem Hausgerät zu dem zentralen Server. In diesem Fall bezieht das Hausgerät nur Daten vom zentralen Server. Dagegen werden Daten vom Kunden über dessen Nutzerverhalten oder dessen Position nicht an den zentralen Server übermittelt. Schließlich ist auch eine Variante mit vollem Datenaustausch zwischen dem Hausgerät und dem zentralen Server möglich. Je nach gewählter Variante kann der Benutzer über das Ausmaß der Preisgabe von Daten über seinen Aufenthaltsort oder seine Gewohnheiten selbst entscheiden.

Das Prinzip der Erfindung wird im Folgenden anhand einer Zeichnung beispielshalber noch näher erläutert. In der Zeichnung zeigen:
- Figur 1: ein Datenübertragungssystem mit einer Mehrzahl von Heißgetränkezubereitungsgeräten gemäß einem ersten Ausführungsbeispiel der Erfindung,
- Figur 2: ein Datenübertragungssystem mit einer Mehrzahl von Heißgetränkezubereitungsgeräten gemäß einem zweiten Ausführungsbeispiel der Erfindung,
- Figur 3: ein Datenübertagungssystem gemäß einem dritten Ausführungsbeispiel der Erfindung.

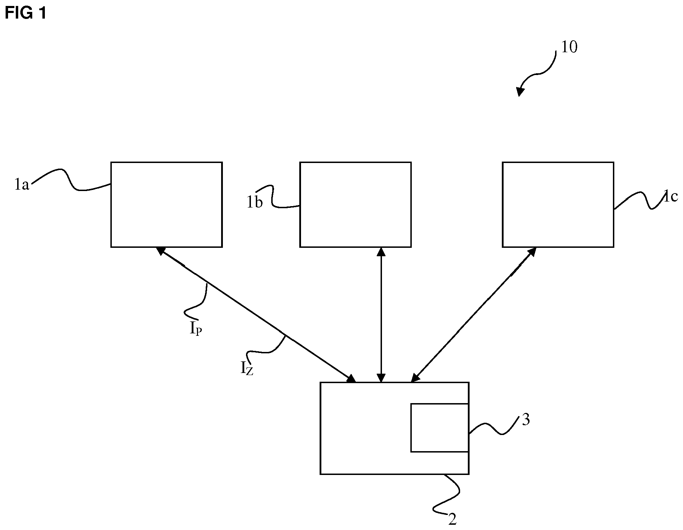

Ein in Figur 1 dargestelltes System 10 gemäß einem ersten Ausführungsbeispiel umfasst eine Mehrzahl von Heißgetränkezubereitungsgeräten 1a, 1b, 1c als Beispiel für Hausgeräte und einen zentralen Server 2 mit einer Datenspeichereinheit 3. Der zentrale Server 2 wird zum Beispiel von einem Produzenten betrieben und erhält von den einzelnen Heißgetränke-Zubereitungsgeräten 1a, 1b, 1c Informationen I_{P} über deren geographische Position sowie zusätzlich Informationen I_{Z}, welche den Typ des jeweiligen Hausgeräts 1a, 1b, 1c umfassen. Die zusätzlichen Informationen können außerdem auch Informationen umfassen, die Eigenschaften oder den Status der Hausgeräte 1a, 1b, 1c charakterisieren. Die zusätzlichen charakterisierenden Informationen I_{Z} können zum Beispiel die Geräte-Identifizierungsnummern der Hausgeräte 1a, 1b, 1c umfassen. In diesem Fall kann zum Beispiel eine Art Landkarte erstellt werden, welche die Verbreitung einzelner Geräteklassen oder Marken eines Produzenten wiedergeben. Anhand der so ermittelten Daten kann der Lieferumfang einzelner Geräteklassen oder Marken für Verkaufsfilialen in Abhängigkeit vom Standort der jeweiligen Filiale festgestellt werden. Die zusätzlichen Informationen können außerdem die Häufigkeit einer Betriebsart der Hausgeräte 1a, 1b, 1c umfassen. Anhand dieser Statistikdaten können beispielsweise Wartungsangebote oder der Umfang des voraussichtlich zu liefernden Zubehörs für die Hausgeräte 1a, 1b, 1c ermittelt werden. Außerdem kann anhand häufig auftretender Nutzereinstellungen die Werkseinstellung bestimmter Gerätetypen regionalspezifisch angepasst werden.

Die zusätzlichen Informationen I_{Z} können Umgebungsbedingungen der Hausgeräte 1a, 1b, 1c, insbesondere Sensordaten, die vorzugsweise die Umgebungstemperatur und/oder die Qualität der Netzspannung umfassen, beinhalten. Die zusätzlichen Informationen I_{Z} können überdies Gerätefehler der Hausgeräte 1a, 1b, 1c, insbesondere die Fehlerart und die Fehlanzahl in einem vorbestimmten Zeitraum, beinhalten. Anhand der Daten hinsichtlich des Auftretens von Gerätefehlern kann zum Beispiel eine Statistik erstellt werden, mit der der Verschleiß der überwachten Geräte 1a, 1b, 1c erfasst wird. Auf Basis dieser Daten können zum Beispiel Reparaturdienstleistungen in Abhängigkeit vom Standort angeboten werden.

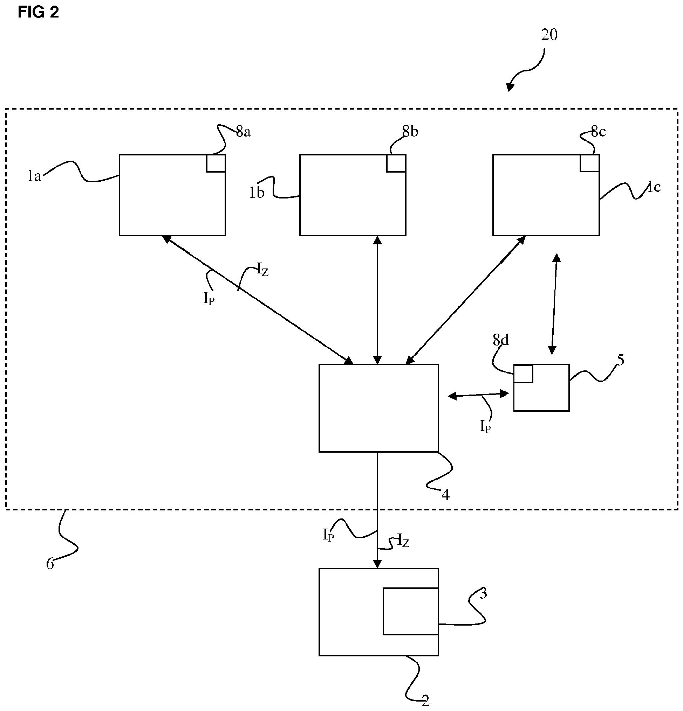

In Figur 2 ist ein System 20 gemäß einem zweiten Ausführungsbeispiel gezeigt. Das System 20 umfasst ein Drahtlosnetzwerk 6. Das Drahtlosnetzwerk 6 kann zum Beispiel ein WLAN, d. h. ein drahtloses lokales Netzwerk sein. Das Drahtlosnetzwerk 6 umfasst einen Zugangspunkt 4 sowie eine Mehrzahl von Teilnehmern 1a, 1b, 1c, 5, welche miteinander über den Zugangspunkt 4 kommunizieren. Zu den Teilnehmern gehören mehrere Hausgeräte 1a, 1b, 1c sowie ein mobiles Endgerät 5. Weiterhin ist das Drahtlosnetzwerk 6 über den Zugangspunkt 4 als Schnittstelle mit einem zentralen Server 2 verbunden, so dass eine Kommunikation der Teilnehmer 1a, 1b, 1c, 5 des Drahtlosnetzwerks 6 mit dem zentralen Server 2 ermöglicht ist.

Der zentrale Server 2 empfängt aus dem Drahtlosnetzwerk 6 Informationen I_{P}, I_{Z} bezüglich der geographischen Positionen einzelner Hausgeräte 1a, 1b, 1c sowie deren Typs. Die Positionen der einzelnen Hausgeräte 1a, 1b, 1c können beispielsweise mit Hilfe einer in den einzelnen Hausgeräten 1a, 1b, 1c eingebauten Positionsermittlungseinheit 8a, 8b, 8c ermittelt werden. Eine Positionsermittlungseinheit 8a, 8b, 8c kann zum Beispiel eine Satelliten-Navigationseinheit, beispielsweise mit einem GPS-Empfänger, umfassen. Die von den Hausgeräten 1a, 1b, 1c ermittelten Positionen werden anschließend in Kombination mit einer Typbezeichnung über den Zugangspunkt 4 an den zentralen Server 2 weitergeleitet. Dort wird eine Statistik, zum Beispiel in Form einer Landkarte, erstellt und in einem Datenspeicher 3 abgespeichert, welche die geographische Häufigkeit einzelner Gerätetypen veranschaulicht. Wie bereits erwähnt, können auch zusätzliche Informationen I_{Z} betreffend die Betriebsart und den Status einzelner Hausgeräten 1a, 1b, 1c aus dem Drahtlosnetzwerk 6 an den zentralen Server 2 übermittelt werden. Diese Daten werden ebenfalls von dem zentralen Server 2 in dem Datenspeicher 3 abgespeichert und bilden eine Art interne Datenbank für den Betreiber des zentralen Servers 2, auf deren Basis Service- und Werbeaktionen durchgeführt werden können.

Alternativ oder zusätzlich kann die Ermittlung der Positionen und Typen der einzelnen Hausgeräte 1a, 1b, 1c auch durch ein mobiles Endgerät 5 ausgeführt werden, welches ebenfalls Teilnehmer des Drahtlosnetzwerks 6 ist. Als mobiles Endgerät 5 kann zum Beispiel ein Smartphone eingesetzt werden, das üblicherweise auch einen GPS-Empfänger 8d besitzt. Befindet sich das Smartphone in der Nähe des Standorts der Hausgeräte 1a, 1b, 1c, so reicht es aus, wenn das Smartphone seine geographische Position mit Hilfe seines GPS-Empfängers ermittelt und die Typen der einzelnen Hausgeräte 1a, 1b, 1c über das Drahtlosnetzwerk 6 abfragt. Die einzelnen Teilnehmer des Drahtlosenetzwerks 6 sind üblicherweise registriert und können daher auch leicht durch eine Anfrage an den Zugangspunkt 4 ermittelt werden. Anschließend werden die geographischen Positionen I_{P} der Hausgeräte 1a, 1b, 1c in Verbindung mit den ermittelten Gerätetypen an den zentralen Server 2 übermittelt, wo die empfangenen Daten statistisch ausgewertet werden und in der Speichereinheit 3 abgespeichert werden. Alternativ kann die geographische Position der Hausgeräte 1a, 1b, 1c auch durch die geographische Position des Drahtlosnetzwerks 6 abgeschätzt werden. Beispielsweise ist in dem Zugangspunkt 4 eine Adresse des Drahtlosnetzwerks 6 abgespeichert, welche zusammen mit individuellen Informationen über die einzelnen Hausgeräte 1a, 1b, 1c des Drahtlosnetzwerks 6 an den zentralen Server 2 übermittelt werden. In dieser Variante werden also die geographischen Positionen der einzelnen Hausgeräte 1a, 1b, 1c des Drahtlosnetzwerks 6 durch die Adresse des Drahtlosnetzwerks 6 abgeschätzt, an dem diese beteiligt sind. In Figur 2 ist nur ein Drahtlosnetzwerk 6 eingezeichnet. Das System 20 kann jedoch eine Vielzahl von lokalen Netzwerken aufweisen, die alle Hausgeräte 1a, 1b, 1c umfassen und in der beschriebenen Art mit dem zentralen Server 2 kommunizieren. Die Kommunikation zwischen dem Zugangspunkt 4 und dem zentralen Server 2 kann zum Beispiel über das Internet realisiert sein.

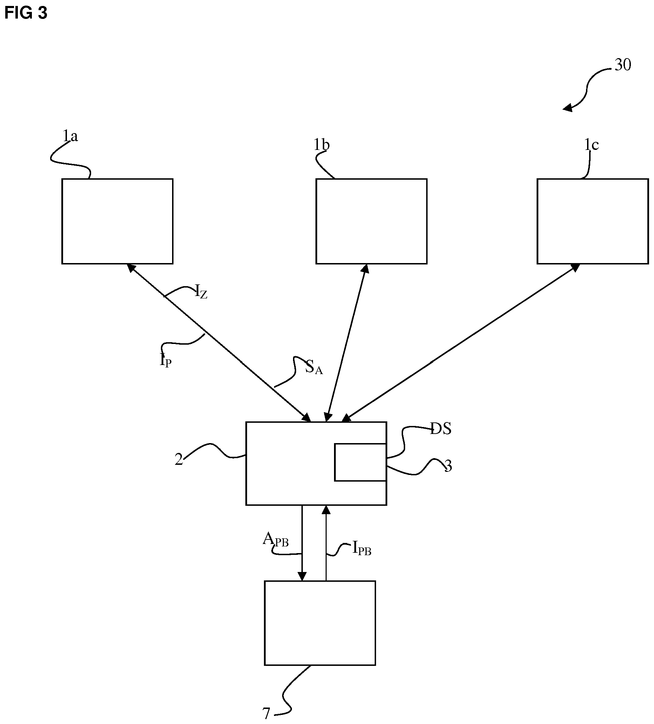

In Figur 3 ist ein System 30 gemäß einem dritten Ausführungsbeispiel gezeigt. Das System 30 umfasst ebenso wie die Systeme des ersten und zweiten Ausführungsbeispiels in Figur 1 und Figur 2 eine Mehrzahl von Hausgeräten 1a, 1b, 1c sowie einen zentralen Server 2 mit einer Speichereinheit 3. Zusätzlich weist das System 30 noch eine externe Datenbank 7 auf, welche auf geographische Positionen bezogene Daten I_{PB} speichert. Diese Daten I_{PB} können zum Beispiel Sonnenaufgang- und - untergangszeiten an verschiedenen geographischen Positionen enthalten. Weiterhin können diese Daten I_{PB} auch Informationen über die Sprache in einer Region oder die aktuellen Uhrzeiten in unterschiedlichen Zeitzonen enthalten. Außerdem können die Daten I_{PB} auch Werte betreffend die Wasserhärte des Trinkwassers in Abhängigkeit vom Ort enthalten. Überdies können die in der externen Datenbank 7 vorhandenen Daten auch Informationen bezüglich regionaler Vorlieben und Benutzergewohnheiten umfassen. Ähnlich wie bei dem ersten und dem zweiten Ausführungsbeispiel werden von den Hausgeräten 1a, 1b, 1c Informationen I_{P}, I_{Z} bezüglich deren Position und deren Typ an den zentralen Server 2 übermittelt. Der zentrale Server 2 richtet nun eine Anfrage A_{PB} an die externe Datenbank 7, mit der er nach Informationen I_{PB} sucht, welche auf die den einzelnen Hausgeräten 1a, 1b, 1c zugeordneten geographischen Positionen bezogen sind, verknüpft diese Informationen mit den von den Hausgeräten 1a, 1b, 1c abgefragten Informationen I_{P}, I_{Z} und speichert die erstellten Datensätze DS in seinem Datenspeicher 3 ab. Die erzeugten Datensätze DS stehen nahfolgend als Informationsgrundlage für eine Vielzahl von Anwendungen für Produzenten, Vertriebseinrichtungen und Wartungsdienstleister zur Verfügung.

Beispielsweise kann eine Änderung der Displayhelligkeit eines Hausgeräts 1a, 1b, 1c in Abhängigkeit von der Sonnenaufgangs- und -untergangszeit am geographischen Ort des Hausgeräts 1a, 1b, 1c vorgenommen werden. Insbesondere kann die Anzeige des Hausgeräts 1a, 1b, 1c bei Nacht abgedunkelt werden, um Energie zu sparen und Schlafstörungen bei Benutzern zu vermeiden. Zusätzlich kann auch eine Einstellung der Sprache eines Hausgeräts 1a, 1b, 1c auf eine Sprache in der Region, in der sich das Hausgerät 1a, 1b, 1c befindet, vorgenommen werden. In diesem Zusammenhang kann auch eine spezielle Schrift bzw. ein spezielles Alphabet für die Anzeige des Hausgeräts 1a, 1b, 1c ausgewählt werden. Die Einstellungen und Änderungen können zum Beispiel durch das Übersenden eines Einstellungssignals S_{A} an das betreffende Hausgerät 1a, 1b, 1c durchgeführt werden. Zusätzlich kann auch die Uhrzeit der Zeitzone sowie das Datum der Zeitzone, in der sich das Hausgerät 1a, 1b, 1c befindet, eingestellt werden. Im Zusammenhang mit der Einstellung des Datums kann eine Umstellung des Hausgeräts 1a, 1b, 1c von Sommer- auf Winterzeit und umgekehrt automatisch erfolgen.

Weiterhin können die erfassten Informationen, beispielsweise bei Heißgetränkezubereitungsgeräten als Hausgeräte, auch zur Anpassung der Hausgeräte 1a, 1b, 1c an den ortsabhängigen Wert der Wasserhärte des genutzten Trinkwassers verwendet werden. Überdies kann auch eine Einstellung von Prozessparametern in Abhängigkeit von regionalen Vorlieben und/oder eine Bereitstellung von speziellen Programmen in Abhängigkeit von regionalen Vorlieben erfolgen. Beispielsweise können spezielle Garprogramme oder Getränkearten für die Geräte bestimmter Regionen bereitgestellt werden. Außerdem kann für eine bestimmte Region ermittelt werden, dass dort beispielsweise Kaffee besonders heiß oder besonders stark getrunken wird. Somit können die Dosierungs- und Temperatureinstellungen der Hausgeräte 1a, 1b, 1c. insbesondere Heißgetränkezubereitungsgeräte, an die jeweiligen regionalen Vorlieben angepasst werden. Es kann auch die Anzeige der Getränkewahl je nach regionalen Vorlieben geändert werden. Beispielsweise können auf der Anzeige einzelne Getränkearten ausgeblendet, angezeigt oder umgeordnet werden.

Es können auch Informationen aus der externen Datenbank über die Höhenlage am Ort des jeweiligen Hausgeräts 1a, 1b, 1c genutzt werden, um eventuell einen Warnhinweis an den Benutzer auszugeben. In vielen Fällen dürfen Hausgeräte 1a, 1b, 1c ab Höhen von etwa 2000 m nicht verwendet werden, da dort die Werte für die Kriech- und Luftstrecken für elektrische Ströme stark von den Werten bei Standardbedingungen abweichen. Die beschriebenen Einstellungen können zum Beispiel durch eine Ansteuerung der einzelnen Hausgeräte 1a, 1b, 1c durch den zentralen Server 2 automatisiert vorgenommen werden. Die Einstellungen können aber auch anhand einer auf den gesammelten Informationen basierenden Statistik bereits bei der Produktion bei an bestimmte Regionen zu liefernden Hausgeräten 1a, 1b, 1c vorgenommen werden. Überdies können Funktionen der Geräte 1a, 1b, 1c nach regionalen Vorlieben priorisiert werden, so dass sie die Benutzer in einem Auswahlmenü schneller anwählen können. Bei einem Defekt eines Hausgeräts 1a, 1b, 1c können auch die Kontaktdaten des jeweils nächsten Kundendienstes an das Hausgerät 1a, 1b, 1c übermittelt werden. Außerdem können die Adressen spezieller Verkaufsstellen an die Nutzer der Hausgeräte 1a, 1b, 1c übermittelt werden, die zum Beispiel spezielles Zubehör, wie zum Beispiel Entkalkungstabletten, Reinigungstabletten und Milchbehälter im Angebot haben.

Da es sich bei den vorhergehenden, detailliert beschriebenen Datenübertragungssystemen um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Datenübertragungssysteme in anderer Form als in der hier beschriebenen folgen. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

1a, 1b, 1c Hausgerät / Heißgetränke-Zubereitungsgerät
2 zentraler Server
3 Datenspeichereinheit
4 Zugangspunkt eines Drahtlosnetzwerks
5 mobiles Endgerät
6 Drahtlosnetzwerk
7 externe Datenbank
8a, 8b, 8c, 8d Positionsermittlungseinheit
10, 20, 30 Datenübertragungssystem/ Kommunikationssystem
A_{PB} positionsbezogene Anfrage
DS Datensatz
I_{P} Positionsinformationen
I_{PB} positionsbezogene Information
I_{Z} zusätzliche Informationen
S_{A} Ansteuerungssignal

## Patentansprüche

1. Datenübertragungssystem (10, 20, 30) umfassend ein Hausgerät (1a, 1b, 1c), insbesondere ein Heißgetränkezubereitungsgerät, und einen zentralen Server (2), wobei das Datenübertragungssystem dazu eingerichtet ist,
- Informationen (I_{P}), die es ermöglichen, die Position des Hausgeräts (1a, 1b, 1c) zu ermitteln, und zusätzliche Informationen (I_{Z}) umfassend den Gerätetyp des Hausgeräts (1a, 1b, 1c) zu ermitteln, und
- die Informationen (I_{P}, I_{Z}) an den zentralen Server (2) zu übermitteln,
- wobei das Datenübertragungssystem (10, 20, 30) eine zusätzliche Datenbank (7) umfasst, welche auf geographische Positionen bezogene Informationen (I_{PB}) speichert, wobei der zentrale Server (2) dazu eingerichtet ist, auf Basis der von dem Hausgerät (1a, 1b, 1c) empfangenen Positionsinformationen (I_{P}) Informationen (I_{PB}) von der Datenbank (7) abzurufen, welche sich auf die geographische Position des Hausgeräts (1a, 1b, 1c) beziehen,
- **dadurch gekennzeichnet, dass** der zentrale Server (2) dazu eingerichtet ist, auf Basis der von dem Hausgerät (1a, 1b, 1c) und der Datenbank (7) erfassten Informationen (I_{Z}, I_{P}, I_{PB}) eine Ansteuerung des Hausgeräts (1a, 1b, 1c) vorzunehmen, um mit der Übermittlung der Informationen (I_{P}) und der zusätzlichen Informationen (I_{Z}) eine an regionale Bedürfnisse angepasste Interaktion zwischen Kunden, Produzenten und Servicedienstleistern zu erlauben.

2. Datenübertragungssystem nach Anspruch 1, **gekennzeichnet durch** ein mobiles Endgerät (5), welches dazu eingerichtet ist, mit dem Hausgerät (1a, 1b, 1c) zu kommunizieren, seinen eigenen Standort zu ermitteln und diese Standortinformation als Standort des Hausgeräts (1a, 1b, 1c) an den zentralen Server und/oder das Hausgerät (1a, 1b, 1c) zu übermitteln.

3. Datenübertragungssystem nach Anspruch 1 oder 2, **dadurch gekennzeichnet, dass** die zusätzlichen Informationen (I_{Z}) eine Angabe mindestens einer der folgenden Arten von Daten umfassen:
- Daten, welche die Eigenschaften oder den Status des Hausgeräts (1a, 1b, 1c) charakterisieren,
- die Geräte-Identifizierungsnummer des Hausgeräts (1a, 1b, 1c),
- die Häufigkeit einer Betriebsart des Hausgeräts (1a, 1b, 1c),
- Umgebungsbedingungen des Hausgeräts (1a, 1b, 1c), insbesondere Sensordaten, die vorzugsweise Umgebungstemperatur und/oder die Qualität der Netzspannung umfassen,
- Gerätefehler des Hausgeräts (1a, 1b, 1c), insbesondere die Fehlerart und die Fehlanzahl in einem vorbestimmten Zeitraum.

4. Datenübertragungssystem nach einem der Ansprüche 1 bis 3, **dadurch gekennzeichnet, dass**
die Ansteuerung das Übertragen eines Einstellsignals (S_{A}) an das Hausgerät (1a, 1b, 1c) umfasst.

5. Datenübertragungssystem nach Anspruch 4, **dadurch gekennzeichnet, dass** das Einstellsignal (S_{A}) umfasst:
- eine Änderung der Displayhelligkeit des Hausgeräts (1a, 1b, 1c) in Abhängigkeit von der Sonnenaufgang- und -untergangszeit am geographischen Ort des Hausgeräts (1a, 1b, 1c) und/oder
- die Einstellung der Sprache des Hausgeräts (1a, 1b, 1c) auf eine Sprache in der Region, in der sich das Hausgerät (1a, 1b, 1c) befindet, und/ oder
- die Einstellung der Uhrzeit der Zeitzone, in der sich das Hausgerät (1a, 1b, 1c) befindet, und/ oder
- die Einstellung der Wasserhärte des Hausgeräts (1a, 1b, 1c) und/oder
- die Einstellung von Prozessparametern in Abhängigkeit von regionalen Vorlieben und/ oder
- das Bereitstellen von speziellen Programmen in Abhängigkeit von regionalen Vorlieben.

6. Datenübertragungssystem nach einem der Ansprüche 1 bis 5, **dadurch gekennzeichnet, dass** der zentrale Server (2) dazu eingerichtet ist, von dem Hausgerät (1a, 1b, 1c) benachbarten Hausgeräten (1a, 1b, 1c) erfasste Informationen bei der Ansteuerung des Hausgeräts (1a, 1b, 1c) zu berücksichtigen.

7. Verfahren zum Betreiben eines Hausgeräts (1a, 1b, 1c), mit einem Datenübertragungssystem nach einem der vorhergehenden Ansprüche.

8. Hausgerät (1a, 1b, 1c) mit einem Datenübertragungssystem nach einem der vorhergehenden Ansprüche, umfassend:
- eine Typermittlungseinheit, welche dazu eingerichtet ist, den Gerätetyp des Hausgeräts (1a, 1b, 1c) zu ermitteln,
- eine Positionsermittlungseinheit, welche dazu eingerichtet ist, die geographische Position des Hausgeräts (1a, 1b, 1c) zu ermitteln,
- eine Schnittstelle zur Kommunikation mit einem zentralen Server (2).

## Claims

1. Data transfer system (10, 20, 30) comprising a household appliance (1a, 1b, 1c), in particular a hot beverage preparation appliance, and a central server (2), wherein the data transfer system is configured
- to determine information (I_{P}), which makes it possible to determine the position of the household appliance (1a, 1b, 1c) and to determine additional information (I_{Z}) comprising the appliance type of the household appliance (1a, 1b, 1c), and
- to transmit the information (I_{P}, I_{Z}) to the central server (2),
- wherein the data transfer system (10, 20, 30) comprises an additional database (7), which stores information (I_{PB}) related to geographic positions, wherein the central server (2) is configured to retrieve information (I_{PB}) from the database (7) which relates to the geographic position of the household appliance (1a, 1b, 1c) on the basis of the position information (I_{P}) received from the household appliance (1a, 1b, 1c),
- **characterised in that** the central server (2) is configured to undertake an actuation of the household appliance (1a, 1b, 1c) on the basis of the information (I_{Z}, I_{P}, I_{PB}) acquired from the household appliance (1a, 1b, 1c) and the database (7), in order to use the transmission of the information (I_{P}) and the additional information (I_{Z}) to allow an interaction between customers, manufacturers and service providers adapted to regional requirements.

2. Data transfer system according to claim 1, **characterised by** a mobile terminal (5) which is configured to communicate with the household appliance (1a, 1b, 1c), to determine its own location and to transmit said location information as a location of the household appliance (1a, 1b, 1c) to the central server and/or the household appliance (1a, 1b, 1c).

3. Data transfer system according to claim 1 or 2, **characterised in that** the additional information (I_{Z}) comprises a specification of at least one of the following types of data:
- data which characterises the properties or the status of the household appliance (1a, 1b, 1c),
- the appliance identification number of the household appliance (1a, 1b, 1c),
- the frequency of an operating mode of the household appliance (1a, 1b, 1c),
- ambient conditions of the household appliance (1a, 1b, 1c), in particular sensor data which preferably comprises ambient temperature and/or the quality of the mains voltage,
- appliance error of the household appliance (1a, 1b, 1c), in particular the error type and the number of errors in a predefined time frame.

4. Data transfer system according to one of claims 1 to 3, **characterised in that** the actuation comprises the transfer of a setting signal (S_{A}) to the household appliance (1a, 1b, 1c).

5. Data transfer system according to claim 4, **characterised in that** the setting signal (S_{A}) comprises:
- changing the display brightness of the household appliance (1a, 1b, 1c) as a function of the sunrise and sunset times at the geographic location of the household appliance (1a, 1b, 1c) and/or
- setting the language of the household appliance (1a, 1b, 1c) to a language in the region in which the household appliance (1a, 1b, 1c) is located and/or
- setting the time to the time zone in which the household appliance (1a, 1b, 1c) is located and/or
- setting the water hardness of the household appliance (1a, 1b, 1c) and/or
- setting process parameters as a function of regional preferences and/or
- providing specific programs as a function of regional preferences.

6. Data transfer system according to one of claims 1 to 5, **characterised in that** the central server (2) is configured to take into account information acquired by household appliances (1a, 1b, 1c) adjacent to the household appliance (1a, 1b, 1c) when actuating the household appliance (1a, 1b, 1c).

7. Method for operating a household appliance (1a, 1b, 1c), with a data transfer system according to one of the preceding claims.

8. Household appliance (1a, 1b, 1c) with a data transfer system according to one of the preceding claims, comprising:
- a type determination unit, which is configured to determine the appliance type of the household appliance (1a, 1b, 1c),
- a position determination unit, which is configured to determine the geographic position of the household appliance (1a, 1b, 1c),
- an interface for communicating with a central server (2).

## Revendications

1. Système de transmission de données (10, 20, 30) comprenant un appareil ménager (1a, 1b, 1c), notamment un appareil de préparation de boissons chaudes, et un serveur central (2), le système de transmission de données étant configuré
- pour déterminer des informations (I_{P}) qui permettent de déterminer la position de l'appareil ménager (1a, 1b, 1c), et des informations supplémentaires (I_{Z}) comprenant le type d'appareil de l'appareil ménager (1a, 1b, 1c), et
- pour transmettre les informations (I_{P}, I_{Z}) au serveur central (2),
- le système de transmission de données (10, 20, 30) comprenant une banque de données (7) supplémentaire, laquelle mémorise des informations (I_{PB}) relatives à des positions géographiques, le serveur central (2) étant configuré, sur la base des informations de position (I_{P}) reçues par l'appareil ménager (1a, 1b, 1c), pour appeler des informations (I_{PB}) de la banque de données (7), lesquelles font référence à la position géographique de l'appareil ménager (1a, 1b, 1c),
- **caractérisé en ce que** le serveur central (2) est configuré pour exécuter une commande de l'appareil ménager (1a, 1b, 1c) sur la base des informations (I_{Z}, I_{P}, I_{PB}) détectées par l'appareil ménager (1a, 1b, 1c) et par la banque de données (7) afin, avec la transmission des informations (I_{P}) et des informations supplémentaires (I_{Z}), de permettre une interaction entre clients, producteurs et prestataires de services, adaptée à des besoins régionaux,

2. Système de transmission de données selon la revendication 1, **caractérisé par** un terminal mobile (5) qui est configuré pour communiquer avec l'appareil ménage (1a, 1b, 1c), pour déterminer son propre emplacement et pour transmettre ces informations d'emplacement au serveur central et/ou à l'appareil ménager (1a, 1b, 1c) en tant qu'emplacement de l'appareil ménager (1a, 1b, 1c).

3. Système de transmission de données selon la revendication 1 ou 2, **caractérisé en ce que** les informations supplémentaires (I_{Z}) comprennent au moins un des types de données suivants :
- données caractérisant les propriétés ou le statut de l'appareil ménager (1a, 1b, 1c),
- le numéro d'identification de l'appareil ménager (1a, 1b, 1c),
- la fréquence d'un mode de fonctionnement de l'appareil ménager (1a, 1b, 1c),
- les conditions environnantes de l'appareil ménager (1a, 1b, 1c), notamment données de capteur, qui comprennent de préférence la température ambiante et/ou la qualité de la tension de secteur,
- erreurs de l'appareil ménager (1a, 1b, 1c), notamment le type d'erreur et le nombre d'erreurs pendant une période de temps prédéterminée.

4. Système de transmission de données selon la revendication 1 à 3, **caractérisé en ce que** la commande comprend la transmission d'un signal de réglage (S_{A}) à l'appareil ménager (1a, 1b, 1c).

5. Système de transmission de données selon la revendication 4, **caractérisé en ce que** le signal de réglage (S_{A}) comprend :
- une modification de la luminosité de l'écran de l'appareil ménager (1a, 1b, 1c) en fonction de l'heure du lever de soleil et du coucher de soleil à l'emplacement géographique de l'appareil ménager (1a, 1b, 1c), et/ou
- le réglage de la langue de l'appareil ménager (1a, 1b, 1c) sur une langue dans la région dans laquelle l'appareil ménager (1a, 1b, 1c) se trouve, et/ou
- le réglage de l'heure de la zone horaire dans laquelle l'appareil ménager (1a, 1b, 1c) se trouve, et/ou
- le réglage de la dureté de l'eau de l'appareil ménager (1a, 1b, 1c), et/ou
- le réglage de paramètres de processus en fonction de préférences régionales, et/ou
- la mise à disposition de programmes spéciaux en fonction de préférences régionales.

6. Système de transmission de données selon la revendication 1 à 5, **caractérisé en ce que** le serveur central (2) est configuré pour tenir compte d'informations détectées par des appareils ménagers (1a, 1b, 1c) voisins à l'appareil ménager (1a, 1b, 1c) lors de la commande de l'appareil ménager (1a, 1b, 1c).

7. Procédé de fonctionnement d'un appareil ménager (1a, 1b, 1c) à l'aide d'un système de transmission de données selon l'une quelconque des revendications précédentes.

8. Appareil ménager (1a, 1b, 1c) doté d'un système de transmission de données selon l'une quelconque des revendications précédentes, comprenant :
- une unité de détermination de type, laquelle est configurée pour déterminer le type d'appareil de l'appareil ménager (1a, 1b, 1c),
- une unité de détermination de position, laquelle est configurée pour déterminer la position géographique de l'appareil ménager (1a, 1b, 1c),
- une interface pour la communication avec un serveur central (2).
